# EUROPÄISCHE PATENTSCHRIFT

(11) **EP 2 916 143 B1**
(45) Veröffentlichungstag und Bekanntmachung des Hinweises auf die Patenterteilung: **09.05.2018**
(21) Anmeldenummer: 15158000.8
(22) Anmeldetag: 06.03.2015
(51) Int. Cl.: G01S 7/481

(54) **Vorrichtung und Verfahren zur Erfassung von Objekten in einem Überwachungsbereich**
Device and method for recording objects in a surveillance area
Dispositif et procédé de détection d'objets dans une zone de surveillance

(30) Priorität: 07.03.2014 CH 3372014
(43) Veröffentlichungstag der Anmeldung: 09.09.2015
(73) Patentinhaber: ELESTA GmbH, 7310 Bad Ragaz (CH)
(72) Erfinder: Mayilo, Sergiy, 7320 Sargans (CH); Guldimann, Dominik, 7402 Bonaduz (CH)
(74) Vertreter: Riederer Hasler & Partner Patentanwälte AG

(56) Entgegenhaltungen:
- EP-A1- 2 157 449
- DE-A1- 10 308 085
- DE-A1- 19 621 188
- DE-C1- 19 732 776
- US-A- 4 271 359
- US-A- 4 630 276
- US-A1- 2005 162 853
- US-A1- 2013 230 306

## Beschreibung

### Technisches Gebiet

Die Erfindung betrifft eine Vorrichtung, insbesondere eine Lichtschranke, und ein Verfahren zur Erfassung von Objekten in einem Überwachungsbereich.

### Stand der Technik

Vorrichtungen zur Erfassung von Objekten, die mit elektromagnetischer Strahlung wie Licht oder Infrarot-Strahlung arbeiten, sind vielseitig einsetzbar. Häufige und auch im Zusammenhang mit der vorliegenden Erfindung besonders interessante Anwendungsformen sind Lichttaster und Lichtschranken, zu denen auch Lichtgitter bzw. Lichtvorhänge als Ausgestaltungsvarianten gehören.

Derartige Vorrichtungen weisen im Allgemeinen einen oder mehrere Emitter elektromagnetischer Strahlen sowie einen oder mehrere Sensoren zur Detektion der Strahlen auf. Ein Emitter arbeitet dabei mit einem oder mehreren Sensoren zur Erzeugung eines elektrischen Signals in Abhängigkeit der Präsenz eines Objekts im Überwachungsbereich der Vorrichtung zusammen. Die durch ein Objekt im Überwachungsbereich der Vorrichtung hervorgerufene Änderung der Intensität der vom Emitter emittierten Strahlung wird mittels des Sensors registriert und in ein Signal, umgewandelt, bei dem es sich normalerweise um ein elektrisches Signal handelt. Das Signal kann anschliessend weiter verarbeitet werden, beispielsweise durch einen Mikroprozessor. Ausserdem besteht die Möglichkeit, dass in Abhängigkeit dieses Signals weitere Prozesse gesteuert werden, wie z.B. der Betriebszustand einer Vorrichtung, insbesondere einer Maschine.

Die vorliegende Erfindung kann ebenfalls eine oder mehrere der vorbeschriebenen Eigenschaften und Funktionen aufweisen.

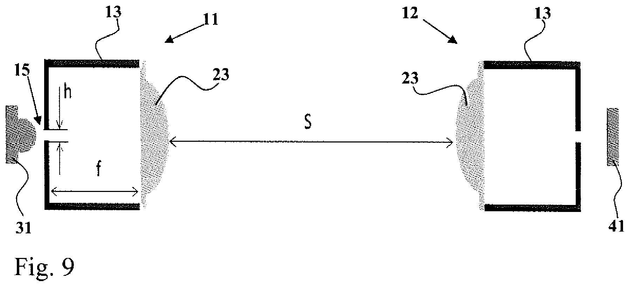

Ein bisher üblicher Aufbau eines Emitters (vgl. Fig.9) umfasst ein Tubus-förmiges Gehäuse, eine Strahlungsquelle zur Emission elektromagnetischer Strahlen und eine Linse als fokussierendes Element. Zwischen Strahlungsquelle und Linse ist eine Blende mit einer Öffnungsweite (h) angeordnet und zwischen Blende und Linse befindet sich ein Hohlraum der Länge (f). Der Sensor ist im Abstand (S) vom Emitter positioniert, wobei die Strahlungsintensität beim Sensor und damit die Reichweite der Vorrichtung natürlich von der Öffnungsweite (h) der Blende abhängt. Die durch den Emitter bestrahlte Fläche am Ort des Sensors wird im Allgemeinen wegen Normbestimmungen und für die Ausrichtbarkeit der Anlage konstant und begrenzt gehalten. Bei Vergrösserung der Blenden-Öffnungsweite (h) müssen deshalb auch die Linse und die Länge (f) des Hohlraums angepasst, d.h. vergrössert werden, damit die bestrahlte Fläche am Ort des Empfängers konstant bleibt. Um eine grössere Reichweite zu erzielen, muss beim Emitter folglich eine Linse mit grösserer Brennweite eingesetzt werden. Diese bauliche Vergrösserung des Emitters ist jedoch für viele Anwendungen unerwünscht. Die vorbeschriebenen Zusammenhänge sind in Fig. 9 dargestellt.

Die EP2157449A1 beschreibt eine Vorrichtung zur Erfassung von Objekten in einem Überwachungsbereich, bei der eine Faltung bzw. Umlenkung der Strahlen vorgesehen ist, wobei damit jedoch im Vergleich zur vorliegenden Erfindung ein anderes Ziel verfolgt wird. Die bekannte Vorrichtung weist einen Emitter und einen Sensor auf mit jeweils einem Gehäuse, einer Linse und einer Strahlungsquelle (beim Emitter) bzw. einem Empfänger (beim Sensor). Zwischen der Linse und der Strahlungsquelle bzw. dem Empfänger ist eine Strahlen-leitende Anordnung in der Form eines Prismas vorgesehen. Das Prisma lenkt die Strahlen zwischen Linse und der Strahlungsquelle bzw. dem Empfänger durch Totalreflexion um etwa 90 Grad um. Das Prisma wirkt als Filter, der erreicht, dass weniger Streulicht ausgesendet bzw. empfangen wird, weil Streulicht, welches in einem Winkel auf die zur Totalreflexion vorgesehene Fläche des Prismas trifft, der kleiner als der Grenzwinkel der Totalreflexion ist, nicht reflektiert wird.

Aus der DE10308085A1 ist eine optoelektronische Vorrichtung zur Erfassung von Objekten in einem Überwachungsbereich bekannt. Bei dieser Vorrichtung ist ebenfalls eine einzige Umlenkung der Empfangslichtstrahlen parallel zur Frontscheibe des Sensors vorgesehen. Der Miniaturisierungseffekt ist jedoch begrenzt.

Die Recherche eines Patentamts hat als weiteren Stand der Technik die US 2005/0162853 A1 ermittelt. Das Dokument betrifft jedoch keine Vorrichtung zur Erfassung von Objekten in einem Überwachungsbereich, wie z.B. Lichtgitter, sondern Beleuchtungssysteme von Projektoren u.ä. Es handelt sich dabei um ein anderes technisches Gebiet mit anderen Zielsetzungen. Gemäss diesem Stand der Technik wird angestrebt, den Lichtstrahlen eine möglichst hohe räumliche Uniformität zu verleihen, indem die Strahlen stark gemischt werden, wofür eine Vielzahl von Reflexionen notwendig ist. Weiter ist es ein Ziel, die Lichtausbeute durch Licht-Recycling zu steigern. Im Gegensatz dazu wird bei Vorrichtungen zur Erfassung von Objekten in einem Überwachungsbereich, wie z.B. Lichtgittern, keine Durchmischung der Strahlen angestrebt, sondern diese sollen möglichst ungemischt geleitet werden, als ob sie sich durch den freien Raum bewegen würden.

Weiter wurde die DE19732776C1 gefunden, die eine Vorrichtung zum Erfassen von Gegenständen in einem Überwachungsbereich lehrt. Die Vorrichtung weist ein Gehäuse mit einem Austrittsfenster und im Gehäuse ein Sendeelement und ein Empfangselement sowie eine rotierende Ablenkeinheit auf. Die Ablenkeinheit erlaubt die periodische Ablenkung der Sendelichtstrahlen zwecks Kontrolle der Verschmutzung des Austrittsfensters.

Die US4271359 beschreibt eine optische Vorrichtung zur Verwendung mit einem passiven Infrarot-Bewegungssensor. Die optische Vorrichtung weist verschiedene optische Elemente auf und erlaubt es, Überwachungsbereiche mit verschiedenen Geometrien zu kontrollierten.

### Aufgabe der Erfindung

Es ist eine Aufgabe der vorliegenden Erfindung, eine Vorrichtung und ein Verfahren zur Erfassung von Objekten in einem Überwachungsbereich bereitzustellen. Die Vorrichtung soll bei gleicher Reichweite kleiner sein, als vergleichbare bekannte Vorrichtungen dieser Art bzw. bei gleicher Grösse eine erhöhte Reichweite aufweisen. Weitere Vorteile und Ziele der vorliegenden Erfindung ergeben sich aus der nachfolgenden Beschreibung.

### Darstellung der Erfindung

Die oben genannte Aufgabe wird gelöst durch eine Vorrichtung nach Anspruch 1 bzw. 10 und ein Verfahren nach Anspruch 10. Offenbart sei unter anderem eine Vorrichtung zur Erfassung von Objekten in einem Überwachungsbereich, beinhaltend einen Sensor und einen Emitter, wobei der Emitter und der Sensor zur Anordnung auf gegenüberliegenden Seiten des Überwachungsbereichs als getrennte Einheiten ausgebildet sind, wobei der Emitter folgende Komponenten beinhaltet:
- eine Strahlungsquelle, zur Emission von elektromagnetischen Strahlen,
- eine Strahlen-leitende Anordnung, welche dazu ausgebildet ist, die Strahlen auf ihrem Weg von der Strahlungsquelle zum Ort des Austritts aus dem Emitter zu leiten und/oder umzulenken, wobei die Strahlen-leitende Anordnung ein fokussierendes Element zur Fokussierung der Strahlen aufweist, und
wobei die Strahlen-leitende Anordnung dazu ausgebildet ist, die Strahlen auf ihrem Weg von der Strahlungsquelle zum Ort des Austritts (der Strahlen) aus dem Emitter durch zwei oder mehr Reflexionen umzulenken;
und/oder der Sensor folgende Komponenten beinhaltet:
- einen Empfänger, zum Empfang von elektromagnetischen Strahlen, und
- eine Strahlen-leitende Anordnung, welche dazu ausgebildet ist, die Strahlen auf ihrem Weg vom Ort des Eintritts in den Sensor zum Empfänger zu leiten, wobei die Strahlen-leitende Anordnung vorzugsweise ein fokussierendes Element zur Fokussierung der Strahlen aufweist, wobei die Strahlen-leitende Anordnung dazu ausgebildet ist, die Strahlen auf ihrem Weg vom Ort des Eintritts in den Sensor zum Empfänger durch zwei oder mehr Reflexionen umzulenken.

Weiterhin ist ein Verfahren zur Erfassung von Objekten in einem Überwachungsbereich offenbart unter Verwendung einer solchen Vorrichtung.

Nachfolgend werden Merkmale der Vorrichtung und des Verfahrens beschrieben, wobei diese (individuell) als bevorzugte Merkmale zu betrachten sind, auch wenn sie nicht als solche bezeichnet werden. Die Merkmale können separat (als Teil einer beliebigen Vorrichtung oder eines beliebigen Verfahrens zur Erfassung von Objekten in einem Überwachungsbereich) oder - soweit sie sich nicht ausschliessen - in beliebiger Kombination verwirklicht sein.

Bei der Vorrichtung handelt es sich bevorzugt um eine optische, insbesondere eine optoelektronische, Vorrichtung.

Bevorzugt ist, wenn der durch die Strahlen-leitende Anordnung definierte Weg der Strahlen von der Strahlungsquelle bis zum Ort des Austritts aus dem Emitter um mindestens 10, 20, 30, 50 oder 100 Prozent länger ist, als der kürzeste Abstand zwischen der Strahlungsquelle und dem Ort des Austritts (der Strahlen) aus dem Emitter.

Nach einer Ausgestaltungsvariante ist der durch die Strahlen-leitende Anordnung definierte Teil des Weges der Strahlen von der Strahlungsquelle zum Ort des Austritts aus dem Emitter (oder zumindest ein Abschnitt davon) im Wesentlichen U- oder V-förmig ausgebildet. Beim Abschnitt handelt es sich vorzugsweise um denjenigen Abschnitt des beschriebenen Weges, auf dem die Strahlen durch die zwei Reflexionen umgelenkt werden.

Weiterhin kann vorgesehen sein, dass der durch die Strahlen-leitende Anordnung definierte Teil des Weges der Strahlen von der Strahlungsquelle zum Ort des Austritts aus dem Emitter (oder zumindest ein Abschnitt davon) im Wesentlichen spiralförmig oder helixförmig oder schneckenförmig oder S-förmig ausgebildet ist.

Gemäss einer weiteren Ausgestaltung ist die Strahlen-leitende Anordnung dazu ausgebildet, die Strahlen auf ihrem Weg von der Strahlungsquelle zum Ort des Austritts aus dem Emitter 2, 3, 4 oder mehr Male umzulenken, insbesondere zu reflektieren, und/oder in unterschiedliche Richtungen zu leiten.

Insbesondere kann die Strahlen-leitende Anordnung dazu ausgebildet sein, die Strahlen auf ihrem Weg von der Strahlungsquelle zum Ort des Austritts (der Strahlen) aus dem Emitter zusätzlich zu den beschriebenen zwei (vorzugsweise aufeinanderfolgenden) Reflexionen durch eine, zwei, drei oder mehr weitere (vorzugsweise aufeinanderfolgende) Reflexionen umzulenken.

Bei den genannten zwei Reflexionen und/oder bei den beschriebenen weiteren Reflexionen kann es sich um Totalreflexionen handeln oder um Reflexionen an spiegelnden oder verspiegelten Flächen. Die Flächen können beschichtet sein.

Die Strahlen-leitende Anordnung kann 1, 2, 3, 4 oder mehr Strahlen-leitende Elemente aufweisen. Die Strahlen-leitenden Elemente können dazu ausgebildet sein, die Strahlen zu leiten und/oder umzulenken. Es kann sich dabei optional um reflektierende Flächen handeln, beispielsweise die oben beschriebenen spiegelnden oder verspiegelten Flächen oder solche, die eine Totalreflexion bewirken. Insbesondere können die Strahlen-leitenden Elemente (oder ein Teil davon) dazu ausgebildet sein, die Strahlen durch die beschriebenen zwei Reflexionen und/ oder durch die beschriebenen zusätzlichen Reflexionen umzulenken.

Es kann von Vorteil sein, wenn ein Strahlen-leitendes Element (z.B. das oder ein fokussierendes Element) aus einem anderen Material oder einer anderen Materialkombination gefertigt ist, als 1, 2, 3,4 oder mehr der anderen Strahlen-leitenden Elemente.

Es kann weiterhin von Vorteil sein, wenn der Emitter ein Strahlen-leitendes Element aufweist, das auf dieses Strahlen-leitende Element treffende Stahlen teilweise (z.B. zu mindestens 20 oder 40 Prozent und/oder zu höchstens 80 oder 60 Prozent) reflektiert und den Rest passieren lässt. Es können auch 2, 3 oder mehr solche Strahlen-leitende Elemente beim Emitter vorgesehen sein.

Weiterhin kann vorgesehen sein, dass 2, 3, 4 oder mehr der Strahlen-leitenden Elemente in der Reihenfolge, in der sie von den Strahlen auf ihrem Weg von der Strahlungsquelle zum Ort des Austritts aus dem Emitter getroffen oder durchlaufen werden, eine zunehmende Grösse aufweisen. Insbesondere, wenn es sich bei den Strahlen-leitenden Elementen (oder einem Teil davon) um reflektierende Flächen handelt, können die Flächen in der beschriebenen Reihenfolge eine zunehmende Grösse aufweisen. Dadurch wird eine Platzersparnis erreicht, wenn die Strahlen, ausgehend von der Strahlungsquelle oder - falls vorhanden - von der Blende divergieren, und so auf dem Weg zum Ort des Austritts aus dem Emitter immer mehr Raum in Anspruch nehmen. Die Strahlen-leitenden Elemente können beispielsweise jeweils nur so gross ausgeführt werden, wie es der Raumbedarf der Strahlen an dieser Stelle des Weges notwendig macht.

Besonders vorteilhaft ist es, wenn 1, 2, 3, 4 oder mehr der Strahlen-leitenden Elemente einstückig, d.h. gemeinsam als ein Stück (insbesondere als ein Spritzgussteil), ausgebildet sind.

Zusätzlich können 1, 2, 3, 4 oder mehr der fokussierenden Elemente im oben beschriebenen einstückigen Vorrichtungsteil beinhaltet sein. Alternativ können diese aber auch getrennt vom beschriebenen einstückigen Vorrichtungsteil sein. Beispielsweise ist dies bei einer Ausgestaltungsform des Emitters der Fall, bei der die fokussierenden Elemente aus einem anderen Material gefertigt sind, als die anderen Strahlen-leitenden Elemente, insbesondere die reflektierenden Strahlen-leitenden Elemente.

Bei einer bevorzugten Ausgestaltungsvariante ist die gesamte Stahlen-leitende Anordnung einstückig ausgebildet oder es ist zumindest dejenige Teil der Strahlen-leitenden Anordnung im oben beschriebenen einstückigen Vorrichtungsteil beinhaltet, welcher dazu ausgebildet ist, die Strahlen auf ihrem Weg von der Strahlungsquelle zum Ort des Austritts aus dem Emitter durch die zwei beschriebenen Reflexionen und/oder durch die beschriebenen weiteren Reflexionen umzulenken.

Diese Massnahmen dienen der Verringerung der Herstellungskosten der Vorrichtung.

Die Strahlen-leitende Anordnung kann dazu ausgebildet sein, die Strahlen auf ihrem Weg zum Ort des Austritts (der Strahlen) aus dem Emitter in der Form mehrerer (z.B. 2, 3, 4 oder mehr) getrennter Strahlenmengen zu leiten (und/oder umzulenken) und die einzelnen Strahlenmengen getrennt voneinander (vollständig oder zumindest streckenweise) über unterschiedliche Strahlen-leitende Elemente (insbesondere unterschiedliche reflektierende Strahlen-leitende Elemente) zum Ort des Austritts aus dem Emitter zu leiten und/oder umzulenken. Die Strahlenmengen können von derselben oder unterschiedlichen Strahlungsquellen stammen.

Alternativ oder zusätzlich kann die Strahlen-leitende Anordnung dazu ausgebildet sein, die Strahlen auf ihrem Weg von der Strahlungsquelle zum Ort des Austritts aus dem Emitter in die mehreren (z.B. in die 2, 3, 4 oder mehr) Strahlenmengen aufzuteilen und die einzelnen Strahlenmengen vom Ort der Aufteilung an oder von den Orten der Aufteilung an (vollständig oder zumindest streckenweise) über unterschiedliche Strahlen-leitende Elemente (insbesondere unterschiedliche reflektierende Strahlen-leitende Elemente) zum Ort des Austritts aus dem Emitter zu leiten und/oder umzulenken. Die Aufteilung kann z.B. dann erfolgen, wenn die Stahlen von derselben Strahlungsquelle stammen.

Wenn die Strahlen auf dem Weg von der Strahlungsquelle zum Ort des Austritts aus dem Emitter divergieren, wird es durch die Aufteilung ermöglicht, mehrere kleinere Strahlen-leitende Elemente statt einer im Vergleich dazu geringeren Anzahl grösserer Elemente einzusetzen. Ein Lichtkegel kann z.B. halbiert werden und beansprucht dann für eine Reflexion statt der ursprünglichen Fläche zwei Mal die halbe Fläche. Diese kleineren Elemente können flexibler positioniert werden.

Alle Strahlenmengen oder zumindest 1, 2, 3, 4 oder mehr der Strahlenmengen können auf dem Weg von der Strahlungsquelle zum Ort des Austritts aus dem Emitter auch wieder zusammengeführt und vom Ort der Zusammenführung an durch dieselben Strahlen-leitenden Elemente geleitet und/oder umgelenkt werden. Dies kann optional für Strahlenmengen gelten, die das Resultat einer Aufteilung von Strahlen sind, oder auch für Strahlenmengen, die von unterschiedlichen Strahlungsquellen stammen.

Die Strahlungsquelle kann auf derselben Seite der Vorrichtung und/oder des Gehäuses angeordnet sein, wie der Ort des Austritts aus dem Emitter. Alternativ können die Strahlungsquelle und der Ort des Austritts aus dem Emitter auf verschiedenen (vorzugsweise auf gegenüberliegenden) Seiten der Vorrichtung und/oder des Gehäuses angeordnet sein.

Es ist zudem möglich, dass beim Emitter 2, 3 oder mehr Orte des Austritts (der Strahlen) aus dem Emitter vorgesehen sind.

In diesem Fall können die unterschiedlichen Strahlenmengen (vgl. dazu weiter oben) zu unterschiedlichen Orten des Austritts aus dem Emitter geleitet und/oder umgelenkt werden.

Die beschriebenen Orte des Austritts können optional auf derselben oder auf unterschiedlichen Seiten des Emitters und/ oder des Gehäuses angeordnet sein. Ein solcher Emitter könnte z.B. Strahlen von unterschiedlichen Orten des Austritts aus dem Emitter und/oder in unterschiedliche Richtungen und/oder zu unterschiedlichen Sensoren aussenden.

Bei der Strahlungsquelle handelt es sich um eine Quelle von elektromagnetischer Strahlung, wobei Licht oder Infrarot-Strahlung bevorzugt sind. Nach einer vorteilhaften Ausgestaltung handelt es sich bei der Strahlungsquelle um eine Leuchtdiode (LED d.h. "light emitting diode") oder eine Laserdiode.

Der Emitter kann - wie weiter oben bereits angesprochen - zusätzlich zur Strahlungsquelle eine oder mehrere weitere Strahlungsquellen zur Emission von elektromagnetischen Strahlen aufweisen. Die Strahlen-leitende Anordnung kann in diesem Fall mit Vorteil dazu ausgebildet sein, auch diese Strahlen auf ihrem Weg von der einen oder den mehreren weiteren Strahlungsquellen zum Ort des Austritts (oder zu den Orten des Austritts) aus dem Emitter zu leiten und/ oder umzulenken.

Nach einer Ausgestaltung weist der Emitter zwei, drei oder mehr Strahlungsquellen auf. Diese können optional (ausgehend von der Vorrichtung) in dieselbe oder in unterschiedliche Richtungen strahlen. Alternativ oder zusätzlich können sie auf derselben Seite der Vorrichtung und/oder des Gehäuses oder auf verschiedenen Seiten der Vorrichtung und/ oder des Gehäuses angeordnet sein.

Der Emitter und der Sensor können als getrennte Einheiten ausgebildet sein, um sie z.B. einander gegenüberliegend angeordnet, insbesondere auf gegenüberliegenden Seiten eines Überwachungsbereichs, installieren zu können.

Es ist jedoch auch möglich (aber nicht beansprucht), den Emitter und den Sensor zusammenzubauen. In diesem Fall können der Emitter und der Sensor optional dieselbe Strahlen-leitende Anordnung nutzen und/oder eine gemeinsame Strahlen-leitende Anordnung aufweisen.

Alternativ oder zusätzlich kann vorgesehen sein, dass ein Strahlen-leitendes Element dazu ausgebildet ist, Strahlen auf ihrem Weg von der Strahlungsquelle zum Ort des Austritts aus dem Emitter, die auf das genannte Strahlen-leitende Element treffen, teilweise zu reflektieren und den Rest passieren zu lassen und Strahlen auf dem entgegengesetzten Weg, die auf das genannte Strahlen-leitende Element treffen, teilweise zu reflektieren und den Rest passieren zu lassen (vgl. auch Ausführungen zu solchen Elementen weiter oben und in der Figurenbeschreibung). Der Sensor kann bei dieser Variante einen jenseits des genannten Strahlen-leitenden Elements angeordneten Empfänger zur Detektion der passierenden Strahlen, welche sich auf dem genannten entgegengesetzten Weg bewegen, aufweisen.

Zwischen der Strahlungsquelle und dem Ort des Austritts aus dem Emitter kann eine Blende angeordnet sein, wobei die Blende vorzugsweise zwischen der Strahlungsquelle und der Strahlen-leitenden Anordnung angeordnet ist. Die Blende kann eine Öffnungsweite von bevorzugt mehr als 0.1, 0.3, 0.5 oder 1 Millimetern und/ oder weniger als 10, 5, 4 oder 3 Millimetern aufweisen.

Es gibt verschiedene Möglichkeiten, die Fokussierung der Strahlen zu bewerkstelligen. Diese kann durch das genannte fokussierende Element und optional durch 1, 2, 3, 4 oder mehr weitere fokussierende Elemente erfolgen (z.B. aus Glas oder Polymer). Die fokussierenden Elemente können z.B. nacheinander von den Strahlen getroffen (z.B. reflektiert) und/oder durchlaufen werden.

Sind mehrere fokussierende Elemente vorgesehen, so können sie jeweils einen Teil der gesamten, durch den Emitter vorgenommenen Fokussierung bewerkstelligen.

Bei 1, 2, 3, 4 oder mehr der fokussierenden Elemente kann es sich z.B. um Linsen handeln oder um reflektierende gekrümmte Flächen. Die Linsenoberfläche oder die reflektierende gekrümmte Fläche kann dabei optional rotationssymmetrisch ausgebildet sein oder achsensymmetrisch mit 1, 2, 3, 4 oder mehr Symmetrieachsen. Alternativ kann es sich bei der Linsenoberfläche oder der reflektierenden gekrümmten Fläche um eine Freiformfläche handeln.

Nach einer Ausgestaltungsvariante sind beim Emitter zwei oder mehr verschiedene Arten von fokussierenden Elementen vorgesehen.

Weiterhin kann vorgesehen sein, dass das fokussierende Element oder (jeweils) ein fokussierendes Element am Ort des Austritts (oder an den Orten des Austritts) aus dem Emitter angeordnet ist.

Die Vorrichtung kann ein Gehäuse aufweisen, wobei sich vorzugsweise zumindest die reflektierenden Strahlen-leitenden Elemente und/ oder (im Wesentlichen) die Strahlen-leitende Anordnung innerhalb des Gehäuses befinden.

Die Strahlungsquelle und/oder das fokussierende Element und/oder die Blende können ebenfalls im Gehäuse angeordnet sein.

Das Gehäuse und/oder das Material, aus dem es gefertigt ist, kann optional für die von der Strahlungsquelle emittierten Strahlen und/ oder für Licht im Wesentlichen undurchlässig sein.

Die Blende kann gemäss einer Ausführungsform vom Gehäuse gebildet sein.

Zweckmässigerweise ist die Strahlen-leitende Anordnung dazu ausgebildet, die Strahlen auf ihrem Weg von der Strahlungsquelle zum Ort des Austritts aus dem Emitter im Wesentlichen innerhalb des Gehäuses zu leiten (und/oder umzulenken) und/oder einen solchen Weg der Strahlen innerhalb des Gehäuses zu definieren.

Nach einer bevorzugten Ausgestaltung kann die Strahlen-leitende Anordnung und/oder können 1, 2, 3, 4 oder mehr der Strahlen-leitenden Elemente (insbesondere der reflektierenden Strahlen-leitenden Elemente und/oder der fokussierenden Elemente) aus Polycarbonat oder Polymethylmethacrylat (PMMA) oder Glas gefertigt sein.

Optional kann die Vorrichtung und/oder das Gehäuse eine Frontscheibe aufweisen, wobei das fokussierende Element bevorzugt zwischen der Frontscheibe und dem Rest der Strahlen-leitenden Anordnung positioniert ist.

Die Frontscheibe ist in diesem Fall zweckmässigerweise am Ort des Austritts aus dem Emitter angeordnet.

Gemäss einer Ausgestaltungsvariante ist die Strahlen-leitende Anordnung dazu ausgebildet, die Strahlen auf ihrem Weg von der Strahlungsquelle zum Ort des Austritts aus dem Emitter nacheinander in mehrere (z.B. 2, 3, 4 oder mehr) unterschiedliche Richtungen zu leiten und/oder umzulenken. Besonders bevorzugt sind drei oder mehr Richtungen, wobei jede der drei Richtungen quer (beispielsweise in einem Winkel von mindestens 10, 20, 40 oder 60 Grad) zu den beiden anderen Richtungen (der drei Richtungen) ausgerichtet ist. Alternativ oder zusätzlich kann die Strahlen-leitende Anordnung dazu ausgebildet sein, die Strahlen auf ihrem Weg von der Strahlungsquelle zum fokussierenden Element in alle drei Raumdimensionen zu leiten und/oder umzulenken. Dies stellt eine weitere Massnahme zur Verlängerung des Weges der Strahlen dar und erlaubt ebenfalls, den Platz im Emitter besser zu nutzen.

Alternativ oder zusätzlich kann die Strahlen-leitende Anordnung dazu ausgebildet sein, die Strahlen auf ihrem Weg von der Strahlungsquelle zum Ort des Austritts aus dem Emitter 1, 2,3 oder mehr Male hin- und her- zu leiten. Auf diese Weise kann ebenfalls der Weg der Strahlen verlängert und der Platz im Emitter besser genutzt werden.

In diesem Dokument wird die Vorrichtung primär über die Merkmale eines Emitters definiert. Wenn nichts anderes angegeben ist, handelt es sich bei den in diesem Dokument beschriebenen Merkmalen um Merkmale des Emitters.

Es sei jedoch auch ein Sensor offenbart, der eines oder mehrere der in diesem Dokument im Zusammenhang mit dem Emitter beschriebenen Merkmale aufweist, wobei der Sensor jedoch anstelle der Strahlungsquelle (oder den Strahlungsquellen) einen Empfänger (oder mehrere Empfänger) zum Empfang elektromagnetischer Strahlung aufweist. Weil die Strahlen in diesem Fall (im Vergleich zum Emitter) den umgekehrten Weg (durch den Sensor) nehmen, seien für diesen Fall alle offenbarten Richtungen und Wege der Strahlen umgekehrt und/ oder entgegengesetzt offenbart. Der "Ort des Austritts aus dem Emitter" wird in diesem Fall zum "Ort des Eintritts in den Sensor". Der Empfänger kann vorteilhaft ein Phototransistor, ein lichtempfindlicher Widerstand oder eine Fotodiode sein.

Die Vorrichtung kann einen solchen Sensor und/oder einen in diesem Dokument beschriebenen Emitter aufweisen, d.h. ein Emitter mit den in diesem Dokument beschriebenen Komponenten kann optional auch mit einem Sensor anderer Bauart kombiniert sein und umgekehrt.

Der beschriebene Emitter und der beschriebene Sensor seien zudem auch unabhängig von der Vorrichtung offenbart.

Zur besseren Nachvollziehbarkeit des oben beschriebenen Sachverhalts sei an dieser Stelle beispielhaft eine Vorrichtung zur Erfassung von Objekten in einem Überwachungsbereich offenbart, beinhaltend einen Sensor und einen Emitter, wobei der Sensor folgende Komponenten beinhaltet: A) optional ein Gehäuse, B) einen Empfänger, zum Empfang von elektromagnetischer Strahlung, und C) eine Strahlen-leitende Anordnung, welche dazu ausgebildet ist, die Strahlen auf ihrem Weg vom Ort des Eintritts in den Sensor zum Empfänger zu leiten und/oder umzulenken, wobei die Strahlen-leitende Anordnung vorzugsweise ein fokussierendes Element zur Fokussierung der Strahlen aufweist. Die Vorrichtung zeichnet sich dadurch aus, dass die Strahlen-leitende Anordnung dazu ausgebildet ist, die Strahlen auf ihrem Weg vom Ort des Eintritts in den Sensor zum Empfänger durch zwei oder mehr Reflexionen umzulenken.

Unabhängig von der Art des Emitters und des Sensors, die die Vorrichtung aufweist, arbeitet ein Emitter vorzugsweise mit einem Sensor zur Erzeugung eines elektrischen Signals in Abhängigkeit der Präsenz eines Objekts im Überwachungsbereich der Vorrichtung zusammen. Die durch ein Objekt im Überwachungsbereich der Vorrichtung hervorgerufene Änderung der Intensität der vom Emitter emittierten Strahlung wird mittels des Sensors registriert und in ein elektrisches Signal umgewandelt. Das Signal kann dann weiter verarbeitet werden, beispielsweise durch einen Mikroprozessor.

Weiterhin sei die Verwendung der in diesem Dokument beschriebenen Vorrichtung, des beschriebenen Emitters und des beschriebenen Sensors offenbart sowie ein Verfahren zur Erfassung von Objekten in einem Überwachungsbereich, welches mit der in diesem Dokument beschriebenen Vorrichtung durchgeführt wird und/oder die in diesem Dokument beschriebenen Verfahrensschritte aufweist.

Begriffe in diesem Dokument sollen bevorzugt so verstanden werden, wie sie ein Fachmann auf dem Gebiet verstehen würde. Sind im jeweiligen Kontext mehrere Interpretationen möglich, so sei vorzugsweise jede Interpretation individuell offenbart. Insbesondere für den Fall, dass Unklarheiten bestehen sollten, können alternativ oder ergänzend die in diesem Dokument aufgeführten bevorzugten Definitionen herangezogen werden.

Nach einer bevorzugten Definition entspricht die Öffnungsweite der Blende dem Abstand der am weitesten voneinander entfernten Randpunkte der Öffnung.

Bei den Strahlen handelt es sich vorzugsweise um die Strahlen, die von der Strahlen-leitende Anordnung auf ihrem Weg A) von der Strahlungsquelle zum Ort des Austritts aus dem Emitter (im Falle des Emitters) oder B) vom Ort des Eintritts in den Sensor zum Empfänger (im Falle des Sensors) geleitet und/oder umgelenkt werden. Wenn in diesem Dokument von "Strahlen" (Plural), d.h. einer Vielzahl von Strahlen die Rede ist, so sei - wo dies zu Unklarheiten führen könnte - das Gesagte nicht nur gemeinschaftlich für die Vielzahl von Strahlen sondern alternativ auch für die einzelnen Strahlen aus dieser Vielzahl von Strahlen (individuell) offenbart. Insbesondere sei, wenn von einer "Richtung" gesprochen wird, auch die jeweilige Richtung eines Strahls offenbart, wobei das in diesem Zusammenhang Gesagte mit Vorteil jeweils auf alle oder die Mehrheit der Vielzahl von Strahlen (individuell) zutrifft.

Ist in diesem Dokument das Vorhandensein eines Gegenstands (z.B. die Strahlungsquelle, das fokussierende Element, die Strahlen-leitende Anordnung, das Strahlen-leitendes Element etc.) erwähnt, so schliesst dies nicht das Vorhandensein zusätzlicher Gegenstände derselben Art aus. Anders ausgedrückt seien bei Erwähnung "eines" Gegenstands jeweils "mindestens ein" solcher Gegenstand und "ein oder mehrere" solcher Gegenstände offenbart. Einer, zwei, drei oder mehr oder sogar alle der zusätzlichen Gegenstände können optional dieselben Merkmale wie der eine Gegenstand aufweisen.

Aktionen, die in der Form von Eignungen, Fähigkeiten, Eigenschaften oder Funktionen der in diesem Dokument beschriebenen Vorrichtung (oder deren Teile wie z.B. Sensor oder Emitter) offenbart sind, seien auch (unabhängig und in beliebiger Kombination) als Verfahrensschritte des Verfahrens offenbart und zwar abhängig und unabhängig von der entsprechenden Vorrichtung oder dem entsprechenden Vorrichtungsteil.

Es sei zudem die Verwendung von Merkmalen der beschriebenen Vorrichtungen oder Vorrichtungsteile (unabhängig und in beliebiger Kombination) als Verfahrensschritte des Verfahrens offenbart.

Umgekehrt können die offenbarten Vorrichtungen oder Vorrichtungsteile Mittel aufweisen, die einen oder mehrere der im Zusammenhang mit dem offenbarten Verfahren genannten Verfahrensschritte durchführen können und/oder dazu ausgebildet sind.

Zudem seien die nachfolgenden Patentansprüche zusätzlich jeweils mit einem Rückbezug auf jeden beliebigen der vorangehenden Patentansprüche ("nach einem der vorhergehenden Ansprüche") offenbart.

### Kurze Beschreibung der Zeichnungen

Es zeigt in schematischer, nicht massstabsgetreuer Darstellung:
- Fig. 1: eine Seitenansicht einer ersten Ausgestaltungsvariante der Vorrichtung mit Teilung der Strahlen;
- Fig. 2: eine Seitenansicht einer zweiten Ausgestaltungsvariante der Vorrichtung mit U-förmigem Weg der Strahlen;
- Fig. 3: eine perspektivische Ansicht einer Strahlen-leitenden Anordnung, welche streckenweise einen im Wesentlichen schraubenförmigen Weg der Stahlen definiert;
- Fig.4: eine Seitenansicht einer dritten Ausgestaltungsvariante der Vorrichtung mit zickzack-förmigem Strahlengang;
- Fig.5: eine Seitenansicht einer vierten Ausgestaltungsvariante der Vorrichtung mit zickzack-förmigem Strahlengang, wobei die Linse durch zwei gekrümmte Reflexionsflächen ersetzt ist;
- Fig.6: eine perspektivische Ansicht (als Aufschnitt) einer Strahlenleitenden Anordnung aus Rotationskörpern mit integriertem fokussierenden Element;
- Fig.7: eine Seitenansicht einer fünften Ausgestaltungsvariante der Vorrichtung mit zwei Strahlungsquellen;
- Fig.8: eine Seitenansicht einer sechsten Ausgestaltungsvariante der Vorrichtung mit einer Strahlungsquelle und einem Empfänger; und
- Fig.9: eine Vorrichtung gemäss Stand der Technik zur Illustration der in der Einleitung beschriebenen Sachverhalte.

### Ausführung der Erfindung

Die Erfindung wird nachfolgend anhand der Zeichnungen beispielhaft erläutert.

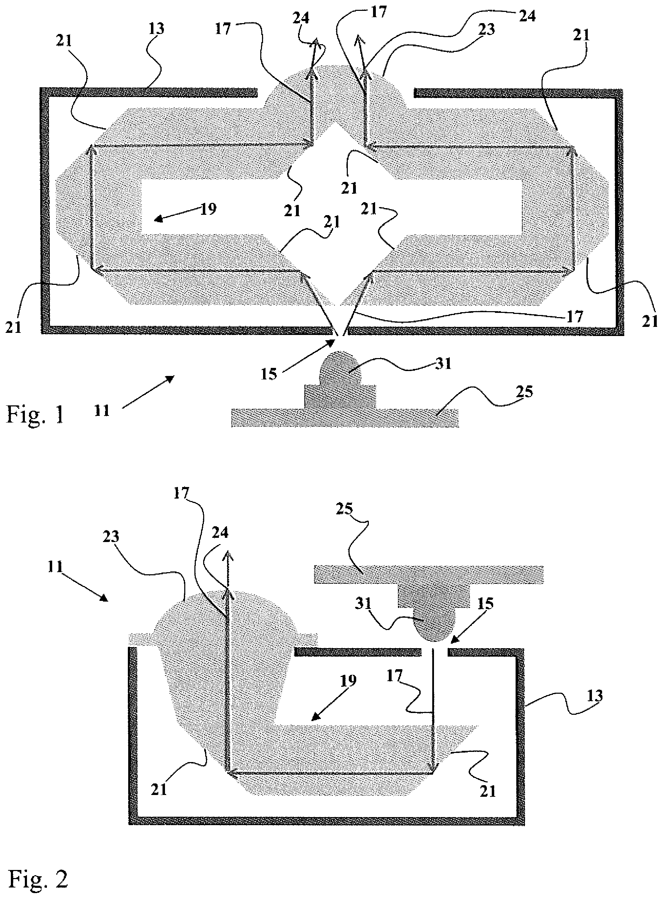

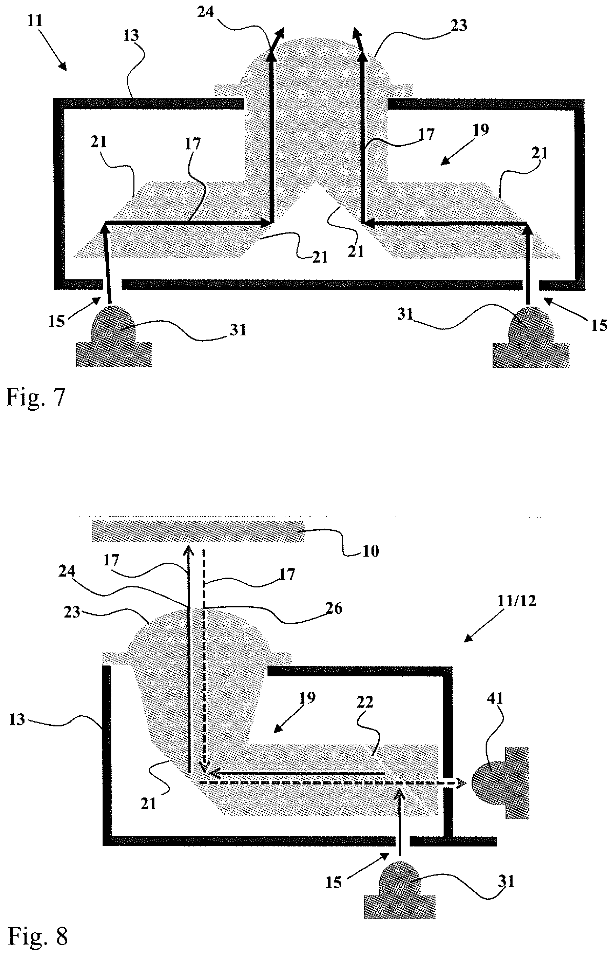

Die Fig.1, 2, 4, 5, 7 und 8 zeigen sechs verschiedene Ausgestaltungsvarianten einer Vorrichtung zur Erfassung von Objekten in einem Überwachungsbereich, wobei mit Ausnahme der Fig.8 (die eine nicht beanspruchte Variante darstellt) jeweils nur ein Emitter 11 gezeigt ist. Eine komplette Vorrichtung würde zweckmässigerweise zusätzlich einen Sensor zur Detektion der vom Emitter 11 ausgesandten Strahlen 17 aufweisen.

Ein solcher Sensor könnte in aus dem Stand der Technik bekannter Weise oder im Prinzip auch gleich aufgebaut sein, wie der in diesem Dokument beschriebene Emitter 11, wobei an der Stelle der Strahlungsquelle 31 (beim gezeigten Emitter 11) ein Empfänger (beim nicht dargestellten Sensor) für die elektromagnetischen Strahlen 17 vorgesehen wäre und die Strahlen 17 statt von der Strahlungsquelle 31 zum Ort des Austritts aus dem Emitter 24 (beim gezeigten Emitter 11) umgekehrt, d.h. vom Ort des Eintritts in den Sensor hin zum Empfänger (beim nicht dargestellten Sensor). Der Ort des Eintritts in den Sensor (beim nicht dargestellten Sensor) würde dann vorzugsweise dem Ort 24 des Austritts aus dem Emitter 24 entsprechen.

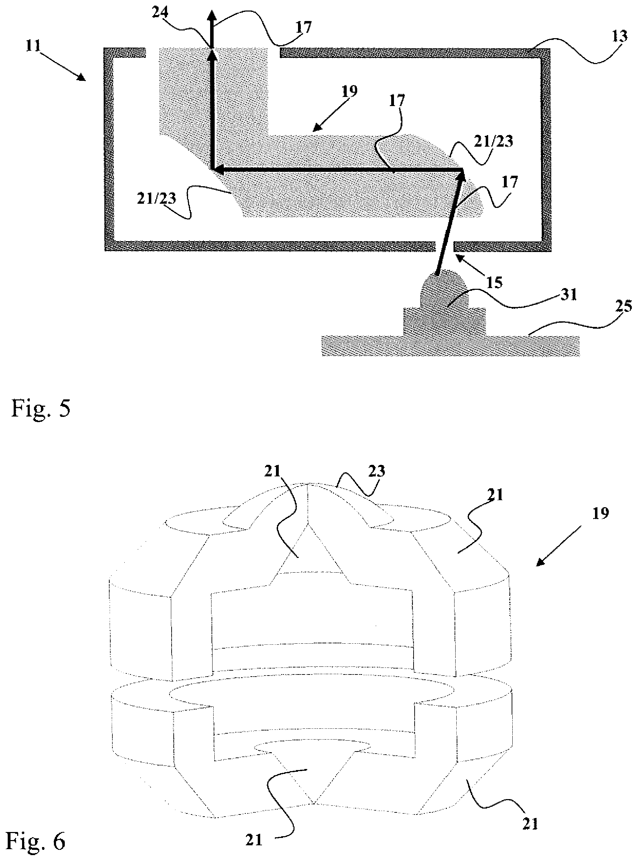

Die in den Fig.1, 2,4,5 und 7 gezeigten Emitter 11 bzw. der in Fig.8 dargestellte kombinierte Emitter/Sensor 11/12 weisen jeweils eine Strahlungsquelle 31 (hier auf einer Leiterplatte 25 angeordnet), ein Gehäuse 13, eine Blende 15, eine Strahlen-leitende Anordnung 19 mit mehreren Strahlen-leitenden Elementen 21 (bzw. 22 in Fig.8) und ein oder mehrere fokussierende Elemente 23 auf, wobei bei der Vorrichtung gemäss Fig.5 die Strahlen-leitenden Elemente 21 gleichzeitig fokussierende Elemente 23 sind. Es handelt sich dabei um gekrümmte Flächen, die die Strahlen 17 einerseits reflektieren und andererseits fokussieren. Bei den übrigen Ausgestaltungsvarianten gemäss den Fig.1, 2, 4, 7 und 8 ist das fokussierende Element 23 am Ort 24 des Austritts der Strahlen 17 aus dem Emitter 11 angeordnet und als Linse ausgebildet. Dazu ist zu sagen, dass das fokussierende Element 23 auch ein Strahlen-leitendes Element ist und zur Strahlen-leitenden Anordnung 19 gehört. Um es jedoch von den übrigen Strahlen-leitenden Elementen 21 zu unterscheiden, wird ihm ein eigenes Bezugszeichen 23 zugeordnet.

Die Strahlungsquelle 31 ist dazu vorgesehen, elektromagnetische Strahlung bzw. elektromagnetische Strahlen 17, insbesondere in der Form von Licht oder Infrarotstrahlung, zu emittieren. Bei der Strahlungsquelle 31 kann es sich beispielsweise um eine LED, eine Infrarot-LED oder einen Laser handeln. (Bei einem entsprechend aufgebauten, nicht gezeigten Sensor wäre die Strahlungsquelle durch einen Empfänger ersetzt, bei dem es sich beispielsweise um einen Phototransistor, einen lichtempfindlichen Widerstand oder eine Fotodiode handeln könnte). Die von der Strahlungsquelle 31 emittierten Strahlen 17, sind in den gezeigten Beispielen vereinfacht als ein Pfeil oder eine Reihe von Pfeilen dargestellt, die den Weg der Strahlen 17 anzeigen. Aus Gründen der Übersichtlichkeit sind nicht alle Pfeile mit Bezugszeichen versehen. Die Strahlen 17 gelangen bei den gezeigten Ausführungsbeispielen von der einen oder den mehreren Strahlungsquellen 31 durch eine optionale Blende 15, welche bei den gezeigten Beispielen durch das Gehäuse 13 gebildet ist, zu einer Strahlen-leitenden Anordnung 19, die die Strahlen 17 leitet und umlenkt und so den Weg der Strahlen von der jeweiligen Strahlungsquelle 31 bis zum Ort 24 des Austritts der Strahlen aus dem Emitter definiert.

Zu diesem Zweck weist die Strahlen-leitende Anordnung 19 mehrere Strahlen-leitende Elemente 21 auf, bei denen es sich vorliegend um Elemente handelt, die die Strahlen 17 reflektieren und im Falle der in Fig.5 gezeigten Variante zusätzlich fokussieren. Ein weiteres spezielles Strahlen-leitendes Element 22 ist in Fig.8 gezeigt. Es teilt die Strahlen 17 in zwei Strahlenmengen auf, wobei eine Strahlenmenge reflektiert wird und die andere Strahlenmenge das Strahlen-leitende Element 22 passiert.

Bei den in den Zeichnungen gezeigten Ausgestaltungsvarianten sind jeweils mehrere Strahlen-leitende Elemente 21,22 so angeordnet, dass sie nacheinander von den Strahlen 17 auf ihrem Weg von der Strahlungsquelle 31 zum Ort 24 des Austritts aus dem Emitter durchlaufen werden.

Wie in Fig.7 gezeigt, können beim Emitter 11 auch mehrere Strahlungsquellen 31 vorgesehen sein. (Entsprechend wäre es auch denkbar, bei einem Sensor mehrere Empfänger einzubauen). Im Beispiel gemäss Fig.7 werden die Strahlen 17 ausgehend von den Strahlungsquellen 31 in der Form getrennter Strahlenmengen (vgl. Pfeile) und streckenweise über unterschiedliche Strahlen-leitende Elemente 21 und nach der Vereinigung der Strahlenmengen gemeinsam zu einem fokussierenden Element 23 geleitet. Der Platz im Emitter 11 kann so gut ausgenutzt werden und durch die mehreren Strahlungsquellen 31 ist auch die Leistung des Emitters verbessert.

Eine konzeptuell ähnliche Variante ist in Fig.1 gezeigt, dort werden die die Blende 15 passierenden Strahlen 17 in zwei Strahlenmengen aufgeteilt, wobei eine erste Strahlenmenge über erste Strahlen-leitende Elemente 21 und eine zweite Strahlenmenge über zweite Strahlen-leitende Elemente 21 der Strahlen-leitenden Anordnung 19 von der Strahlungsquelle 31 zum Ort 24 des Austritts aus dem Emitter geleitet werden. Natürlich wäre es auch möglich, die Strahlen in drei, vier oder mehr Strahlenmengen aufzuteilen und diese Strahlenmengen auf dem Weg von der Strahlungsquelle zum Ort 24 des Austritts aus dem Emitter jeweils (komplett oder zumindest streckenweise) über unterschiedliche Strahlen-leitende Elemente zu leiten und/ oder umzulenken.

Weil die von der Strahlungsquelle emittierten Strahlen eine Streuung aufweisen, wird es durch die Aufteilung in mehrere Strahlenmengen ermöglicht, statt Strahlen-leitender Elemente, die für die Leitung und/ oder Umlenkung der Gesamtheit der von der Strahlungsquelle emittierten Strahlen ausgebildet sind, Strahlen-leitende Elemente zu verwenden, die für die Leitung und/oder Umlenkung der Strahlenmengen ausgebildet sind, für die Leitung und/oder Umlenkung der Gesamtheit von Strahlen aber zu klein wären. Es können also anstatt einer geringen Anzahl grösserer Strahlen-leitender Elemente mehrere kleinere, flexibel positionierbare Strahlen-leitende Elemente eingesetzt werden.

Eine noch stärkere Aufteilung der Strahlen 17 kann mit einer Strahlen-leitenden Anordnung 19, wie sie in Fig.6 gezeigt ist, erreicht werden. Das Besondere ist ihre Ausbildung als Rotationskörper. Im gezeigten Beispiel ist deshalb das erste Strahlen-leitende Element (21 unten), auf das die Strahlen auf ihrem Weg von der Strahlungsquelle zum Ort des Austritts aus dem Emitter treffen, im Wesentlichen kegel- oder kegelstumpfförmig. Da die Oberfläche des kegel- oder kegelstumpfförmigen Strahlen-leitenden Elements 21 in der Praxis zweckmässigerweise in Richtung von der Basis hin zur Spitze gekrümmt (also im Längsschnitt nicht gerade wie bei einem Kegel oder Kegelstumpf) wäre, kann allgemeiner auch davon gesprochen werden, dass es sich beim genannten Strahlen-leitenden Element 21 um einen sich verjüngenden und/oder spitz zulaufenden Rotationskörper handelt. Durch das Strahlen-leitende Element 21 werden die Strahlen reflektiert und so im Wesentlichen radial nach aussen geleitet. Anschliessend werden sie durch weitere, vorzugsweise im Wesentlichen kegelstumpfförmige (oder allgemeiner: als sich verjüngende Rotationskörper ausgebildete) Strahlen-leitende Elemente (21 seitlich), reflektiert und so umgelenkt, bis sie wieder auf ein im Wesentlichen kegel- oder kegelstumpfförmiges Strahlen-leitendes Element (21 oben) treffen. Bei letzterem kann es sich allgemeiner ausgedrückt ebenfalls um einen spitz zulaufenden und/oder sich verjüngenden Rotationskörper handeln. Dort werden die Strahlen zusammengeführt und anschliessend im Wesentlichen in dieselbe Richtung geleitet. Anschliessend können sie optional durch ein fokussierendes Element 23 fokussiert werden. Eine Strahlen-leitende Anordnung 19 könnte aber statt einer Rotationssymmetrie auch 1, 2, 3, 4 oder mehr Symmetrieachsen aufweisen. Beispielsweise könnte sie im Querschnitt quadratisch, rechteckig oder vieleckig, insbesondere regelmässig vieleckig, sein. In diesem Fall bestünde die Möglichkeit, das beschriebene erste Strahlen-leitende Element und optional auch ein beschriebenes Strahlen-leitendes Element, durch welches die Strahlen zusammengeführt werden, z.B. im Wesentlichen pyramidenförmig auszubilden. Im Schnitt könnten die im Zusammenhang mit Fig.6 beschriebenen Varianten wie die in Fig.1 dargestellte aussehen. Auch in diesem Beispiel werden die Strahlenmengen vor dem Erreichen des Ortes 24 des Austritt aus dem Emitter 11 vereinigt und von diesem Punkt an durch die Strahlen-leitende Anordnung 19 gemeinsam zum Ort 24 des Austritts aus dem Emitter geleitet.

Das fokussierende Element 23 befindet sich mit Vorteil - wie in Fig.1, 2, 4, 7 und 8 gezeigt - am Ort 24 des Austritts aus dem Emitter. Dies ist jedoch nicht zwingend. Es besteht auch die Möglichkeit, mehrere fokussierende Elemente 23 vorzusehen. Diese können z.B. so angeordnet sein, dass sie nacheinander von den Strahlen 17 auf ihrem Weg von der Strahlungsquelle 31 zum Ort 24 des Austritts durchlaufen werden - wie dies beispielhaft in Fig.5 dargestellt ist. Alternativ oder zusätzlich können die fokussierenden Elemente 23 dazu ausgebildet sein, jeweils einen Teil der Strahlen (Strahlenmenge) zu fokussieren, wenn diese z.B. - wie in Fig.1 gezeigt - aufgeteilt werden.

Vorzugsweise erlaubt es die Strahlen-leitende Anordnung 19, dass die Strahlen 17 auf dem Weg von der Strahlungsquelle 31 zum fokussierenden Element 23 divergieren und/oder sich voneinander entfernen. Dies wird - wie beispielhaft in den Fig.1, 2, 4, 7 und 9 gezeigt - erreicht, indem die Strahlen-leitende Anordnung 19 die Strahlen 17 jeweils mehrfach umlenkt, insbesondere reflektiert, und so nacheinander in verschiedene (z.B. 2, 3, 4 oder mehr) Richtungen leitet bevor diese den Ort 24 des Austritts aus dem Emitter erreichen.

Die Strahlen-leitende Anordnung 19 kann auch dazu ausgebildet sein, die Strahlen 17 jeweils in eine oder nacheinander in mehrere (z.B. 2, 3, 4 oder mehr) Richtungen zu leiten und/oder umzulenken, die quer (z.B. in einem Winkel von mindestens 10, 20, 30 oder 60 Grad) zu einer direkten Verbindung zwischen Strahlungsquelle 31 und dem Ort 24 des Austritts aus dem Emitter ausgerichtet sind, wie dies beispielhaft in Fig.1, 2, 4, 5, 7 und 8 dargestellt ist.

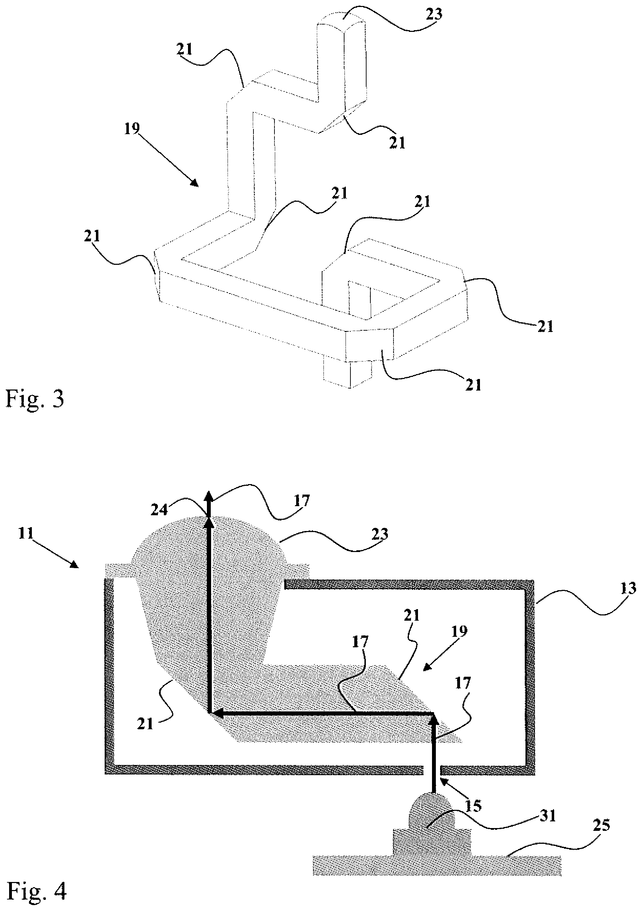

Besonders vorteilhaft ist es, wenn die Strahlen 17 auf dem Weg von der Strahlungsquelle 31 zum Ort 24 des Austritts aus dem Emitter jeweils einmal oder mehrmals hin und her geleitet werden, so dass die Strahlen 17 jeweils über eine Strecke, die sie in eine Richtung zurückgelegt haben, wieder zurückgeführt werden. Eine solche Variante ist beispielhaft in Fig.1 und 2 gezeigt und würde auch durch eine Strahlen-leitende Anordnung gemäss Fig.3 bewirkt.

Eine weitere Möglichkeit, den Weg von der Strahlungsquelle 31 zum Ort 24 des Austritts aus dem Emitter zu verlängern, besteht darin, die Strahlen 17 jeweils mittels der Strahlen-leitenden Anordnung 23 in mindestens drei Richtungen zu leiten und/oder umzulenken, die im Wesentlichen nicht in einer gemeinsamen Ebene liegen. Eine Strahlen-leitende Anordnung, wie sie beispielhaft in Fig.3 gezeigt ist, würde dies bewirken. So werden alle 3 Raumdimensionen genutzt.

Eine weitere Möglichkeit, den Weg zwischen der Strahlungsquelle 31 und dem Ort 24 des Austritts zu verlängern besteht darin, die Strahlen-leitende Anordnung 23 dazu auszubilden, die Strahlen auf dem Weg von der Strahlungsquelle zum Ort des Austritts aus dem Emitter nacheinander in mehrere Richtungen zu leiten und/ oder umlenken, die ein repetitives Muster bilden, in dem sich eine oder mehrere dieser Richtungen mindestens 2, 3 oder 4 mal widerholen. Auf diese Weise kann die Strahlen-leitende Anordnung 19 z.B. im Wesentlichen einen spiralförmigen (vgl. z.B. Fig.3), schneckenförmigen, S-förmigen oder Zickzackförmigen Weg für die Strahlen 17 definieren.

Wie dies in den Fig.1 bis 8 dargestellt ist, kann die ganze Strahlen-leitende Anordnung 19 (Fig.1 bis 5 und 7 bis 8) oder es können zwei oder mehr Strahlen-leitende Elemente 21 (Fig.6), optional auch einschliesslich eines oder mehrerer fokussierender Elemente 23, einstückig ausgebildet sein. Solche Teile können z.B. kostengünstig durch Spritzguss hergestellt werden.

In Fig.2 ist zu erkennen, dass die Strahlungsquelle 31 an einer beliebigen Position relativ zum Ort 24 des Austritts aus dem Emitter angeordnet sein kann. Die Strahlungsquelle 31 und das fokussierende Element 23 können z.B. auf derselben Seite des Emitters 11 oder des Gehäuses 13 angeordnet sein, wie dies in Fig.2 dargestellt ist, oder sie können auf verschiedenen, insbesondere gegenüberliegenden Seiten des Emitters 11 oder Gehäuses 13 angeordnet sein, wie dies die Fig.1, 4, 5, 7 und 8 zeigen. Sind mehrere Strahlungsquellen 31 vorgesehen, können diese ebenfalls auf derselben Seite oder auf verschiedenen Seiten des Emitters 11 oder des Gehäuses angeordnet sein.

Bei der (nicht beanspruchten) Variante gemäss Fig.8, bei der es sich um einen Lichttaster handelt, sind der Emitter 11 und der Sensor 12 zusammengebaut. Sie sind als eine Vorrichtung 11/12 ausgebildet und weisen mit Vorteil - wie gezeigt - ein gemeinsames Gehäuse 13 auf. Die von der Strahlungsquelle 31 emittierten Strahlen (durchgezogene Pfeile) werden auf ihrem Weg zum Ort 24 des Austritts aus der Vorrichtung 11/12 an einem Strahlen-leitenden Element 22 reflektiert. Nach ihrem Austritt aus der Vorrichtung 11/12 treffen sie auf ein Objekt 10 und werden teilweise von diesem reflektiert. Die reflektierten Strahlen (gestrichelte Pfeile) treten am Ort 26 des Eintritts in die Vorrichtung 11/12 ein und treffen auf ihrem Weg vom genannten Ort 26 zum Empfänger 41 auf das genannte Strahlen-leitende Element 22, wobei sie dieses passieren, um zum Empfänger 41 zu gelangen und von diesem detektiert zu werden.

Es ist prinzipiell auch möglich, ein in Fig.8 gezeigtes Strahlen-leitendes Element 22, das die auftreffenden Strahlen teilweise reflektiert und teilweise durchlässt (vgl. Ausführungen zum Strahlen-leitenden Element 22 und Fig.8 weiter oben), für die Konstruktion eines Emitters einzusetzen. Das genannte Strahlen-leitende Element kann dazu verwendet werden, die Strahlen 17 in zwei Strahlenmengen aufzuteilen, wobei diese dann beispielsweise wie oben für die unterschiedlichen Strahlenmengen beschrieben weiter geleitet werden können.

### Bezugszeichenliste:

- 10: Objekt
- 11: Emitter
- 12: Sensor
- 13: Gehäuse
- 15: Blende
- 17: Strahlen
- 19: Strahlen-leitende Anordnung
- 21: Strahlen-leitendes Element (reflektierend)
- 22: Strahlen-leitendes Element (richtungsabhängig reflektierend/transparent)
- 23: fokussierendes Element
- 24: Ort des Austritts aus dem Emitter
- 25: Leiterplatte
- 26: Ort des Eintritts in den Sensor
- 31: Strahlungsquelle / LED
- 41: Empfänger

## Patentansprüche

1. Vorrichtung zur Erfassung von Objekten (10) in einem Überwachungsbereich, beinhaltend einen Sensor (12) und einen Emitter (11), wobei der Emitter (11) und der Sensor (12) zur Anordnung auf gegenüberliegenden Seiten des Überwachungsbereichs als getrennte Einheiten ausgebildet sind, **dadurch gekennzeichnet dass**:
der Emitter (11) folgende Komponenten beinhaltet:
- eine Strahlungsquelle (31), zur Emission von elektromagnetischen Strahlen (17), und
- eine Strahlen-leitende Anordnung (19), welche dazu ausgebildet ist, die Strahlen (17) auf ihrem Weg von der Strahlungsquelle (31) zum Ort des Austritts (24) aus dem Emitter (11) zu leiten, wobei die Strahlen-leitende Anordnung (19) ein fokussierendes Element (23) zur Fokussierung der Strahlen (17) aufweist, wobei die Strahlen-leitende Anordnung (19) dazu ausgebildet ist, die Strahlen (17) auf ihrem Weg von der Strahlungsquelle (31) zum Ort des Austritts (24) aus dem Emitter (11) durch zwei oder mehr Reflexionen umzulenken;
und/oder der Sensor (12) folgende Komponenten beinhaltet:
- einen Empfänger (41), zum Empfang von elektromagnetischen Strahlen (17), und
- eine Strahlen-leitende Anordnung (19), welche dazu ausgebildet ist, die Strahlen (17) auf ihrem Weg vom Ort des Eintritts (26) in den Sensor (12) zum Empfänger (41) zu leiten, wobei die Strahlen-leitende Anordnung (19) vorzugsweise ein fokussierendes Element (23) zur Fokussierung der Strahlen (17) aufweist, wobei die Strahlen-leitende Anordnung (19) dazu ausgebildet ist, die Strahlen (17) auf ihrem Weg vom Ort des Eintritts (26) in den Sensor zum Empfänger (41) durch zwei oder mehr Reflexionen umzulenken.

2. Vorrichtung nach Anspruch 1, **dadurch gekennzeichnet, dass** der durch die Strahlen-leitende Anordnung (19) definierte Weg der Strahlen (17) von der Strahlungsquelle (31) zum Ort des Austritts (24) aus dem Emitter (11) zumindest streckenweise im Wesentlichen S-förmig oder zickzackförmig ausgebildet ist.

3. Vorrichtung nach einem der Ansprüche 1 bis 2, **dadurch gekennzeichnet, dass** zumindest der Teil der Strahlen-leitenden Anordnung (19), der dazu ausgebildet ist, die Strahlen (17) auf ihrem Weg von der Strahlungsquelle (31) zum Ort des Austritts (24) aus dem Emitter (11) durch die zwei Reflexionen umzulenken, vorzugsweise einschliesslich des fokussierenden Elements (23), einstückig ausgebildet ist, insbesondere als ein Spritzgussteil.

4. Vorrichtung nach einem der Ansprüche 1 bis 3, **dadurch gekennzeichnet, dass** die Strahlen-leitende Anordnung (19) mehrere Strahlen-leitende Elemente (21,22) aufweist und die Strahlen-leitende Anordnung (19) dazu ausgebildet ist, die Strahlen (17) auf ihrem Weg zum Ort des Austritts (24) aus dem Emitter (11) in der Form mehrerer getrennter Strahlenmengen zu leiten und die einzelnen Strahlenmengen getrennt voneinander zumindest streckenweise über unterschiedliche Strahlen-leitende Elemente (21,22) zum Ort des Austritts (24) aus dem Emitter (11) zu leiten.

5. Vorrichtung nach Anspruch 4, **dadurch gekennzeichnet, dass** die Strahlen-leitende Anordnung (19) dazu ausgebildet ist, die Strahlen (17) auf ihrem Weg von der Strahlungsquelle (31) zum Ort des Austritts (24) aus dem Emitter (11) in die mehreren Strahlenmengen aufzuteilen und die einzelnen Strahlenmengen vom Ort der Aufteilung an zumindest streckenweise über unterschiedliche Strahlen-leitende Elemente (21,22) zum Ort des Austritts (24) aus dem Emitter (11) zu leiten.

6. Vorrichtung nach einem der Ansprüche 1 bis 5, **dadurch gekennzeichnet,**
**dass** die Strahlen-leitenden Elemente (21,22) in der Reihenfolge, in der sie von den Strahlen (17) auf ihrem Weg von der Strahlungsquelle (31) zum Ort des Austritts (24) aus dem Emitter (11) getroffen oder durchlaufen werden, eine zunehmende Grösse aufweisen.

7. Vorrichtung nach einem der Ansprüche 1 bis 6, **dadurch gekennzeichnet, dass** der Emitter (11) zusätzlich zur Strahlungsquelle (31) eine oder mehrere weitere Strahlungsquellen (31) zur Emission von elektromagnetischen Strahlen (17) aufweist, wobei die Strahlen-leitende Anordnung (19) dazu ausgebildet ist, auch diese Strahlen (17) auf ihrem Weg von der einen oder den mehreren weiteren Strahlungsquellen (31) zum Ort des Austritts (24) aus dem Emitter (11) zu leiten.

8. Vorrichtung nach einem der Ansprüche 1 bis 7, **dadurch gekennzeichnet, dass** eines der Strahlen-leitenden Elemente (22) dazu ausgebildet ist, einen Teil der auf dieses Strahlen-leitende Element (22) treffenden Strahlen (17) zu reflektieren und den Rest passieren zu lassen.

9. Vorrichtung nach einem der Ansprüche 1 bis 8, **dadurch gekennzeichnet, dass** es sich bei der Vorrichtung um eine Lichtschranke handelt.

10. Verfahren zur Erfassung von Objekten (10) in einem Überwachungsbereich unter Verwendung einer Vorrichtung nach einem der Ansprüche 1 bis 9.

## Claims

1. Device for the detection of objects (10) in a monitoring area comprising a sensor (22) and an emitter (11), wherein the emitter (11) and the sensor (12) are configured to be arranged on opposite sides of the monitoring area as separated units, **characterized in that**
the emitter (11) comprises the following components:
- a source of radiation (31) for emitting electromagnetic rays (17) and
- a radiation conducting arrangement (19) that is configured to conduct the rays (17) on their way from the source of radiation (31) to the location of the outlet (24) from the emitter (11), wherein the radiation conduction arrangement (19) has a focusing element (23) for focusing the rays (17), wherein the radiation conduction arrangement (19) is configured to deflect the rays (17) on their way from the source of radiation (31) to the location of the outlet (24) from the emitter (11) by two or more reflections,
and/or the sensor (12) comprises the following components:
- a receiver (41) for the reception of electromagnetic rays (17) and
- a radiation conducting arrangement (19) that is configured to conduct the rays (17) on their way from the location of the inlet (26) into the sensor (12) to the receiver (41), wherein the radiation conducting arrangement (19) preferably has a focusing element (23) for focusing the rays (17), wherein the radiation conducting arrangement (19) is configured to deflect the rays (17) on their way from the location of the inlet (26) into the sensor to the receiver (41) by two or more reflections.

2. Device according to claim 1, **characterized in that** the path of the rays (17) from the source of radiation (31) to the location of the outlet (24) from the emitter (11), defined by the radiation conducting arrangement (19), is configured substantially S-shaped or zigzag shaped at least in sections.

3. Device according to one of the claims 1 to 2, **characterized in that** at least the part of the radiation conducting arrangement (19) that is configured to deflect the rays (17) on their way from the source of radiation (31) to the location of the outlet (24) from the emitter (11) by the two reflections is designed in one piece, preferably including the focusing element (23), in particular as an injection molded piece.

4. Device according to one of the claims 1 to 3, **characterized in that** the radiation conducting arrangement (19) has several ray conducting elements (21, 22) and the radiation conducting arrangement (19) is configured to direct the rays (17) on their way to the location of the outlet (24) from the emitter (11) in the form of several separated ray quantities and to direct the single ray quantities, separated from each other, at least in sections over different ray conducting elements (21, 22) to the location of the outlet (24) from the emitter (11).

5. Device according to claim 4, **characterized in that** the ray conducting arrangement (19) is configured to divide the rays (17) on their way from the source of radiation (31) to the location of the outlet (24) from the emitter (11) into the several ray quantities and to direct the single ray quantities from the location of the division at least in sections over different ray conducting elements (21, 22) to the location of the outlet (24) from the emitter (11).

6. Device according one of the claims 1 to 5, **characterized in that** the ray conducting elements (21, 22) have an increasing size in the order in which they are hit or passed through by the rays (17) on their way from the source of radiation (31) to the location of the outlet (24) from the emitter (11).

7. Device according to one of the claims 1 to 6, **characterized in that** the emitter (11) has additionally to the source of radiation (31) one or several further sources of radiation (31) for the emission of electromagnetic rays (17), wherein the ray conducting arrangement (19) is configured to also direct these rays (17) on their way from the one or the several further sources of radiation (31) to the location of the outlet (24) from the emitter (11).

8. Device according to one of the claims 1 to 7, **characterized in that** one of the ray conducting elements (22) is configured to reflect a part of the rays (17) that hit this ray conducting element (22) and to let pass the rest.

9. Device according to one of the claims 1 to 8, **characterized in that** the matter is, for the device, of a light barrier.

10. Method for the detection of objects (10) in a monitoring area by using a device according to one of the claims 1 to 9.

## Revendications

1. Dispositif pour la détection d'objets (10) dans une zone de surveillance qui comprend un capteur (12) et un émetteur (11), l'émetteur (11) et le capteur (12) étant configurés pour être placés sur des côtés opposés de la zone de surveillance en tant qu'unités séparées, **caractérisé en ce que** l'émetteur (11) comprend les composants suivants :
- une source de rayonnement (31) pour l'émission de rayonnements électromagnétiques (17) et
- un arrangement conducteur de rayonnements (19) qui est configuré pour conduire les rayonnements (17) sur leur trajet de la source de rayonnement (31) à l'endroit de la sortie (24) de l'émetteur (11), l'arrangement conducteur de rayonnements (19) présentant un élément focalisateur (23) pour la focalisation des rayonnements (17), l'arrangement conducteur de rayonnements (19) étant configuré pour dévier les rayonnements (17) sur leur trajet de la source de rayonnement (31) à l'endroit de la sortie (24) de l'émetteur (11) par deux ou plusieurs réflexions
et/ou le capteur (12) comprend les composants suivants :
- un récepteur (41) pour la réception de rayonnements électromagnétiques (17) et
- un arrangement conducteur de rayonnements (19) qui est configuré pour diriger les rayonnements (17) sur leur trajet de l'endroit de l'entrée (26) dans le capteur (12) au récepteur (41), l'arrangement conducteur de rayonnements (19) présentant de préférence un élément focalisateur (23) pour la focalisation des rayonnements (17), l'arrangement conducteur de rayonnements (19) étant configuré pour dévier les rayonnements (17) sur leur trajet de l'endroit de l'entrée (26) dans le capteur au récepteur (41) par deux ou plusieurs réflexions.

2. Dispositif selon la revendication 1, **caractérisé en ce que** le trajet des rayonnements (17) de la source de rayonnement (31) à l'endroit de la sortie (24) de l'émetteur (11), défini par l'arrangement conducteur de rayonnements (19), est configuré sensiblement en forme de S ou en zigzag au moins par sections.

3. Dispositif selon l'une des revendications 1 à 2, **caractérisé en ce qu'**au moins la partie de l'arrangement conducteur de rayonnements (19), qui est configurée pour dévier les rayonnements (17) sur leur trajet de la source de rayonnement (31) à l'endroit de la sortie (24) de l'émetteur (11), est configurée de préférence en une pièce y compris l'élément focalisateur (23), en particulier en une pièce moulée par injection.

4. Dispositif selon l'une des revendications 1 à 3, **caractérisé en ce que** l'arrangement conducteur de rayonnements (19) présente plusieurs éléments conducteurs de rayonnement (21, 22) et l'arrangement conducteur de rayonnements (19) est configuré pour diriger les rayonnements (17) sur leur trajet vers l'endroit de la sortie (23) de l'émetteur (11) sous forme de plusieurs quantités de rayonnements séparés et pour diriger les différentes quantités de rayonnements de manière séparée les unes des autres au moins par sections par différents éléments conducteurs de rayonnement (11, 22) vers l'endroit de la sortie (24) de l'émetteur (11).

5. Dispositif selon la revendication 4, **caractérisé en ce que** l'arrangement conducteur de rayonnements (19) est configuré pour diviser les rayonnements (17) sur leur trajet de la source de rayonnement (31) à l'endroit de la sortie (24) de l'émetteur (11) en plusieurs quantités de rayonnements et de diriger les différentes quantités de rayonnements de l'endroit de la division au moins par sections par différents éléments conducteurs de rayonnement (21, 22) vers l'endroit de la sortie (24) de l'émetteur (11).

6. Dispositif selon l'une des revendications 1 à 5, **caractérisé en ce que** les éléments conducteurs de rayonnement (21, 22) présentent une grandeur croissante dans l'ordre dans lequel ils sont touchés ou traversés par les rayonnements (17) sur leur trajet de la source de rayonnement (31) à l'endroit de la sortie (24) de l'émetteur (11).

7. Dispositif selon l'une des revendications 1 à 6, **caractérisé en ce que** l'émetteur (11) présente, en plus de la source de rayonnement (31), une ou plusieurs autres sources de rayonnement (31) pour l'émission de rayonnements électromagnétiques (17), l'arrangement conducteur de rayonnements (19) étant également configuré pour diriger les rayonnements (17) sur leur trajet de l'une ou des plusieurs autres sources de rayonnement (31) à l'endroit de la sortie (24) de l'émetteur (11).

8. Dispositif selon l'une des revendications 1 à 7, **caractérisé en ce qu'**un des éléments conducteurs de rayonnement (22) est configuré pour réfléchir une partie des rayonnements (17 qui touchent cet élément conducteur de rayonnements (22) et laisser passer le reste.

9. Dispositif selon l'une des revendications 1 à 8, **caractérisé en ce qu'**il s'agit, pour le dispositif, d'une barrière photoélectrique.

10. Procédé pour la détection d'objets (10) dans une zone de surveillance en utilisation un dispositif selon l'une des revendications 1 à 9.
